**Europäisches Patentamt**

**European Patent Office**

**Office européen des brevets**

(19)

(11) Veröffentlichungsnummer: **0 009 764**
**B1**

(12) **EUROPÄISCHE PATENTSCHRIFT**

(45) Veröffentlichungstag der Patentschrift: **28.04.82**

(51) Int. Cl.³: **B 65 G 15/18**

(21) Anmeldenummer: **79103655.1**

(22) Anmeldetag: **26.09.79**

(54) Deckbandförderer.

(30) Priorität: **26.09.78 DE 2841795**

(43) Veröffentlichungstag der Anmeldung:
**16.04.80 Patentblatt 80/8**

(45) Bekanntmachung des Hinweises auf die Patenterteilung:
**28.04.82 Patentblatt 82/17**

(84) Benannte Vertragsstaaten:
**AT BE DE FR GB IT NL SE**

(56) Entgegenhaltungen:
**DE - A - 2 519 447**
**DE - B - 1 140 506**
**DE - C - 936 918**
**DE - C - 1 120 978**
**DE - U - 1 718 127**
**FR - A - 802 827**

(73) Patentinhaber: **Conrad Scholtz AG**
**Am Stadtrand 55/59**
**D-2000 Hamburg 70 (DE)**

(72) Erfinder: **Neuhaus, Günter**
**Waterblöcken 11**
**D-2000 Hamburg 70 (DE)**
Erfinder: **Nolte, Günther**
**Illbrucksweg 13**
**D-413 Moers 2 (DE)**
Erfinder: **Blättermann, Karl-Günther**
**Eichberg 24**
**D-2000 Hamburg-Rahlstedt (DE)**

(74) Vertreter: **Lieck, Hans-Peter, Dipl.-Ing.**
**Maximiliansplatz 10**
**D-8000 München 2 (DE)**

Courier Press, Leamington Spa, England.

## Deckbandförderer.

Die Erfindung bezieht sich auf Deckbandförderer, also Förderer mit zwei Fördergurten aus Gummi oder dergleichen, die in der Förderstrecke vertikal übereinander laufen und in Verbindung mit einer gegenseitigen Abdichtung an ihren Rändern das Fördergut zwischen sich ein-schließen. Solche Deckbandförderer sind ins-besondere für die Steil- und Senkrechtförderung geeignet und hier ganz besonders für die Förderung von staubigem Gut, das von einem offenen, steil oder senkrecht geführten Fördergurt nur höchst unvollkommen oder gar nicht mitgenommen werden könnte.

Ein Deckbandförderer nach dem Oberbegriff des Patentanspruches 1 ist aus der DE—A 2 519 447 bekannt. Bei diesem sind beide Fördergurte mit in Längsrichtung gewellten Seitenwänden, sogenannten Wellenkanten, gleicher Höhe besetzt, die an den Längsrändern paarweise nebeneinander stehen und so hoch sein können, daß sie zusammen mit den Fördergurten eine sehr großen Förderraum umgrenzen. Auch die Dichtigkeit des Förderraumes des bekannten Deckbandförderers ist befriedigend, weil alle Wellenkanten mit ihrem Kopf den jeweils anderen Fördergurt berühren und deshalb der Förderraum auf beiden Seiten nach Art einer Labyrinth-Dichtung verschlossen ist. Die Dichtigkeit ist allerdings nur so lange gewährleistet, wie beide Fördergurte jeweils an die Wellenkanten des anderen Fördergurtes angelegt bleiben. Durch die in gekrümmten Förderstrecken auftretenden Fliehkräfte, aber auch durch Einschluß sehr groben Gutes kann es jedoch zum zeitweiligen gegenseitigen Abheben der Fördergurte kommen, wenn nicht relativ aufwendige Andrückrollen-Konstruktionen vorgesehen sind.

Aus der FR—A 802 827 ist bereits ein Deck-bandförderer bekannt, dessen beide Förder-gurte senkrecht zu Förderbandebene sich erstreckende Wände haben, an denen seitlich in Längsrichtung durchgehende Profile ausgebildet sind, die ineinander greifen und so die beiden Fördergurte derart gegenseitig abstützen können, daß der kastenartige Förderraum geschlossen bleibt. Bei den senkrechten Wänden der Fördergurte handelt es sich allerdings nicht um Wellenkanten, sondern um solche, die ge-radlinig in Fördergurtlängsrichtung durch-gehen. Wegen der notwendigen Umlenkbarkeit der Fördergurte ist die Höhe dieser Wände sehr begrenzt; entsprechend klein ist der Förderraum zwischen den Fördergurten. Außerdem bleibt es offen, wie die für die Auf- und Abgabe des Fördergutes notwendige Öffnung und Schließung des Förderraumes bei derart gestalteten Wänden in geeigneter Weise bewirkt werden könnte. In die Praxis haben entsprechende Deckbandförderer kaum Eingang gefunden.

Der Erfindung liegt die Aufgabe zugrunde, den gattungsgemäßen Deckbandförderer so auszugestalten, daß sein großer Förderraum zwischen den beiden Fördergurten auch unter ungünstigen Bedingungen stets dicht geschlossen bleibt.

Diese Aufgabe ist erfindungsgemäß mit dem im Anspruch 1 gekennzeichneten Deckbandförderer gelöst.

Bei dem erfindungsgemäßen Deckbandförderer ist eine hervorragende Abdichtung des Förderraumes an den paarweise nebeneinander stehenden Wellenkanten dadurch erzielt, daß deren einander zuweisenden Profile ähnlich einer Verzahnung aneinander angreifen und die Wellenkanten mit dem Kopf an den jeweils anderen Fördergurt angedrückt halten. Dies ermöglicht eine steile und sogar vertikale Förderung ohne Verwendung von Andrückrollen mit der Folge einer großen Kosten- und Gewichtsersparnis bei der Anlagenkonstruktion. Auch unter sehr ungünstigen Bedingungen, zum Beispiel beim Einwirken von Fliehkräften auf den in einer gekrümmten Förderstrecke außen laufenden Fördergurt, kann es nicht zu einem gegenseitigen Abheben der beiden Fördergurte und damit Öffnen des Förderraumes kommen. Versuche haben gezeigt, daß beim erfindungsgemäßen Deckbandförderer eine Abdichtung des Förderraumes vorliegt, die auch bei feinstem, staubförmigem Gut praktisch keinen ungewollten Gutaustritt erlaubt.

Das Schließen und Öffnen des Förder-raumes hinter der Aufgabestelle und vor der Abwurfstelle erfolgt beim erfindungsgemäßen Deckbandförderer weitgehend verschleißfrei, weil die Profile an den Seiten der Wellenkante wie die Flanken einer Zahnrad-Verzahnung allmählich zunehmend in und außer gegenseitige Berührung kommen können, ohne daß es hierzu einer starken Verformung elastischen Materials bedarf; es genügt eine leichte Kippbewegung der hinsichtlich des Förderraumes äußeren Wellenkanten am Deckgurt. Diese wiederum kann z.B. sehr einfach durch eine leichte negative Muldung des Deckgurtes in den Randbereichen erzielt werden.

Die hier verwendeten Begriffe Traggurt und Deckgurt beziehen sich auf die Situation hinter der Aufgabestelle. Bei Deckbandförderern mit bestimmter Förderstreckenführung, zum Beispiel einer C-förmigen Förderstrecke, vertauschen sich die Funktionen von Trag- und Deckgurt im Zuge der Förderstrecke; der Traggurt an der Aufgabestelle hat hierbei vor der Abwurfstelle die Funktion eines Deckgurtes.

Die seitliche Kippbewegung der Wellenkanten des Deckgurtes zum In- und Außereingriffbringen der Profile beziehungsweise zum Verriegeln und Entriegeln der Wellenkanten-Paare wird in günstiger Weise bei geringem mechanischen Aufwand mittels Umlenktrommeln gemäß Anspruch 2 und 3 erzielt. Beim Umlauf legt sich der Deckgurt aufgrund seiner Spannung an die nach außen konisch sich verjüngenden Randbereiche an, wodurch es zum Kippen seiner Wellenkanten nach außen kommt. Beim Übergang von der Umlenktrommel in die Förderstrecke bewegen sich die Randzonen des Deckgurtes zurück in die Planlage, wodurch die geschilderte Verriegelung der Wellenkanten-Paare automatisch erfolgt. Der Vorgang kann gegebenenfalls durch eine unmittelbar hinter der Umlenktrommel angeordnete Andruckrolle unterstützt werden. Die Entriegelung vor der Abwurfstelle erfolgt in umgekehrter Weise. Wenn der Deckgurt vor der Abwurfstelle mit stehenden Wellenkanten läuft, wird die Kippbewegung durch das Gewicht der Wellenkanten begünstigt, die die Randzonen des Deckgurtes automatisch nach unten drücken. Die natürliche Streckung der Wellenkanten im Kopfbereich beim Trommelumlauf begünstigt ebenfalls die Ver- und Entriegelung der Wellenkanten-Paare.

Aus der DE—U 1 718 127 ist es allerdings bei einem Deckbandförderer bereits bekannt, durch Umlenktrommeln mit konisch nach außen verjüngten Randbereichen eine Anlege- bzw. Abhebebewegung des umgelenkten Fördergurtes relativ zum zweiten Fördergurt des Deckbandförderers zu erzeugen.

Zweckmäßigerweise haben die Profile jeweils eine Länge in Fördergurtlängsrichtung gemäß Anspruch 4 und 5. Hierdurch wird erreicht, daß jedes Profil immer, in jeder relativen Längs-Position von Deck- und Traggurt, einen Widerhalt an einem oder zwei Profilen der benachbarten Wellenkante findet und dementsprechend stets alle Profile zum Zusammenhalt der Fördergurte an den Wellenkanten-Paaren beitragen.

Für das verschleißfreie In- und Außereingrifftreten der Profile ist eine geometrische Ausbildung derselben gemäß den Ansprüchen 6, 7 und 8 besonders günstig. Die entsprechenden einfachen Formen der Profile erleichtern außerdem ihre Herstellung. Dies betrifft namentlich den Umstand, daß es für das einwandfreie Funktionieren des erfindungsgemäßen Deckbandförderers nicht notwendig ist, daß die Profile hinterschnittene Bereiche besitzen.

Die Profile sind vorzugsweise gemäß Anspruch 9 in einem Stück mit ihrer Wellenkante gefertigt, indem sie zum Beispiel gleichzeitig mit der Wellenkante in einer speziell gestalteten Form vulkanisiert werden.

Bei einer günstigen Ausbildungsform des neuen Deckbandförderers sind die Profile als Profilnoppen gemäß Anspruch 10 ausgebildet. Eine solche Ausbildung ist besonders für sinusförmige, also sinusförmig gewellte Wellenkanten geeignet, wobei dann beide Wellenkanten jedes Wellenkanten-Paares mit derartigen über ihre Scheitelebene seitlich mit einer gewißen Höhe von z.B. 20 Millimeter überstehenden Profilnoppen versehen sind, die sich gegenseitig mit ihren außerhalb des Umrisses der eigentliche Wellenkante liegenden Unterseiten berühren können.

Grundsätzlich jedoch müssen nicht alle Profile über dem Umriß der eigentlichen Wellenkante seitlich vorstehen. Wenn nach einer anderen, bevorzugten Ausführungsform der Erfindung Vertiefungen gemäß Anspruch 11 in den Wellenscheiteln vorgesehen sind, brauchen über dem Umriß der eigentlichen Wellenkante hinausstehende, also über die Scheitelebene seitlich überstehende Profile an sich nur an einer der beiden Wellenkanten jedes Wellenkanten-Paares vorgesehen zu sein, um die gewünschte Verbindung zwischen den beiden Wellenkanten zu erzielen. Dann aber werden relativ tiefe Vertiefungen benötigt, was wegen der damit verbundenen Schwächung der Wellenkante nachteilig sein kann. Deshalb wird man auch bei einer Ausbildung nach Anspruch 11 besser so vorgehen, daß an beiden Wellenkanten von deren Scheitelebene wegstehende Profile in Verbindung mit entsprechenden Vertiefungen an beiden Wellenkanten vorhanden sind. In jedem Fall ermöglichen es die Vertiefungen, die beiden Wellenkanten jedes Wellenkanten-Paares besonders dicht, und zwar bis zur gegenseitigen Berührung ihrer Wellenscheitel, nebeneinander zu stellen, was eine besonders gute Stabilität der ganzen Anordnung zur Folge hat und außerdem eine noch weiter erhöhte Abdichtung an den Wellenkanten bewirkt. Für die Ausbildungsform mit Vertiefungen eignen sich insbesondere reckteckförmige, also in einer Rechteckwelle verlaufende Wellenkanten, weil deren ebene Wellenscheitel genügend Platz für die Ausbildung der Vertiefungen bieten. Um Relativbewegungen in Fördergurtlängsrichtung zwischen den an Profilen und Vertiefungen miteinander in Eingriff stehenden Wellenkanten nicht zu behindern, sind die Vertiefungen an ihren Stirnenden offen.

Die Abstände zwischen benachbarten Reihen von Profilen an einer Wellenkante und die vertikalen Abmessungen der Profile selber können so gewählt werden, daß sich die Profile tatsächlich nur an ihren Unterseiten berühren. Sind mehrere Reihen von Profilen vorhanden, können die Abmessungen aber auch so gewählt werden, daß wie bei einer Verzahnung eine Berührung zusätzlich an den Oberseiten der Profile zustande kommt. Dies ist für die Abdichtung zwischen den Wellenkanten günstig.

Letzteres führt in Verbindung mit der Anwendung von Vertiefungen zu einer Ausbildungsform nach Anspruch 12 und 13, bei der die Vorteile einer hohen Stabilität, einer besonders guten Abdichtung zwischen den Wellenkanten und eines leichten In- und Außereingriffbringens der Wellenkanten ohne große Materialbeanspruchung in optimaler Weise vereinigt sind.

Die Weiterbildung nach Anspruch 14 und 15 wird besonders bevorzugt, weil sie eine weitgehend oder sogar vollständig gleiche Ausbildung der Wellenkanten bedeutet und damit konstengünstig ist.

Im folgenden ist die Erfindung mit weiteren vorteilhaften Einzelheiten anhand schematisch dargestellter Ausführungsbeispiele näher erläutert. Es zeigen:

Figur 1 eine stark vereinfachte Seitenansicht eines Deckbandförderers mit C-förmiger Förderstrecke,

Figur 2 einen Schnitt nach der Linie 2—2 in Figur 1,

Figur 3 eine isometrische Ansicht eines Fördergurt-Stückes mit aufgesetzter Wellenkante für den Deckbandförderer nach Figur 1,

Figur 4 eine Figur 2 entsprechende Darstellung mit abgewandelter Anordnung der Profilnoppen an den Wellenkanten der Fördergurte,

Figur 5 einen Querschnitt durch die beiden Fördergurte gemäß Figur 4 im verriegelten Zustand ihrer Wellenkanten,

Figur 6 eine Draufsicht auf eine andere Wellenkante eines Fördergurtes für einen Deckbandförderer z.B. nach Figur 1,

Figur 7 eine Querschnitt nach der Linie 7—7 in Figur 6.

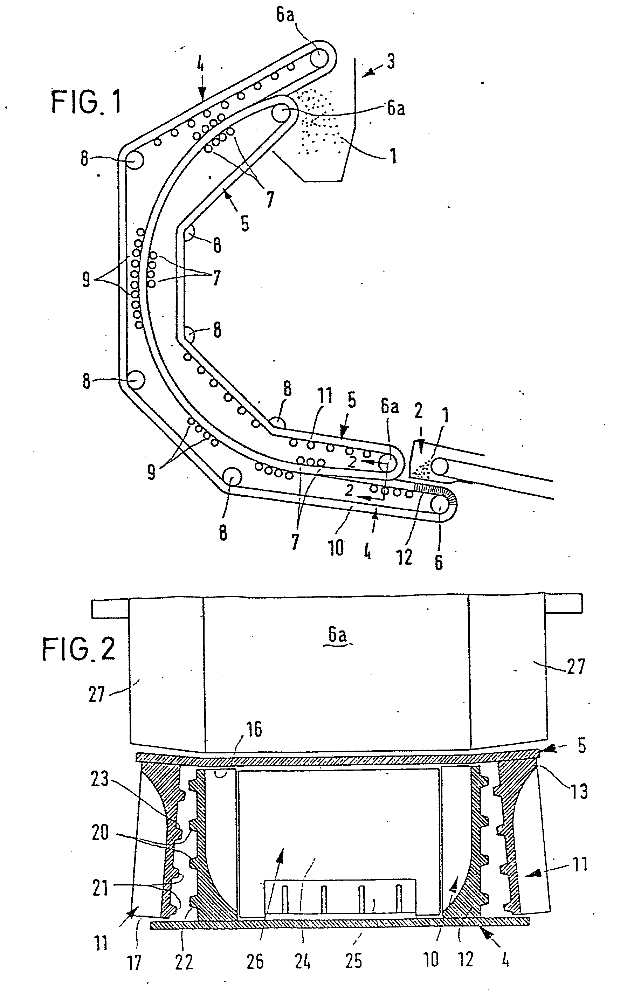

Figur 1 zeigt einen Deckbandförderer mit C-förmiger Förderstrecke. Er dient zur Überkopf-Förderung von staubigem Schüttgut 1 von einer Aufgabestelle 2 zu einer oberhalb der Aufgabestelle gelegenen Abgabestelle 3. Die Förderung wird mittels zweier Fördergurte 4 und 5 bewirkt, die mit praktisch gleicher Geschwindigkeit zwischen Umlenktrommeln 6 mit ihren Vorwärtstrumen über gerade Stütztrommeln 7 und mit ihren Rückwärtstrumen über Ablenktrommeln 8 laufen.

An der Aufgabestelle 2 bildet der dort untere Fördergurt 4 den Traggurt, auf den der andere Fördergurt 5 als Deckgurt hinter der Aufgabestelle aufgelegt wird. Die derart mit ihren Vorwärtstrumen vereinigten beiden Fördergurte laufen längs der gleichmäßig gekrümmten, durch die Stütztrommeln 7 definierten Förderstrecke parallel zueinander bis zur Abwufstelle 3, wo sie wieder voneinander abgehoben werden. Im Zuge der Förderstrecke am senkrechten Abschnitt derselben vertauschen sich die Funktionen der beiden Fördergurte 4 und 5; oberhalb des senkrechten Abschnittes übernimmt der Deckgurt 5 die Tragfunktion und der Traggurt 4 die Deckfunktion.

Weitere Stütztrommeln 9 im Zuge der Förderstrecke, an denen der Vorwärtstrum des Traggurtes anliegen kann, sind nur bei hohen Fördergeschwindigkeiten vorgesehen, um die dann auftretenden hohen Fliehkräfte mit abzufangen.

Beide ungemuldeten Fördergurte 4 und 5 sind jeweils mit zwei seitlichen Wellenkanten 10 beziehungsweise 11 versehen, die jeweils in einem der beiden Randbereiche ihres Fördergurtes von diesem mit ihrer Hauptebene ungefähr senkrecht wegstehen und alle vier die gleiche Höhe haben, vergleiche Figur 2. Bei beiden Fördergurten 4 und 5 sind die Wellenkanten 10 beziehungsweise 11 jeweils symmetrisch zur Längsmittellinie des jeweiligen Fördergurtes angeordnet. Dabei haben die Wellenkanten 10 des Traggurtes 4 in Querrichtung einen kleineren gegenseitigen Abstand als die Wellenkanten 11 des Deckgurtes 5 derart, daß zwischen benachbarten Wellenkanten 10 und 11 jeweils ein kleiner Querabstand verbleibt. Die untereinander alle gleich ausgebildeten Wellenkanten 10 und 11 sind mit ihrem Fördergurt an einem Fuß 12 beziehungsweise 13 verbunden. Der Traggurt 4 ist zwischen seinen Wellenkanten 10 in regelmäßigen Längsabständen mit Mitnehmerstollen 24 besetzt, die die gleiche Höhe wie die Wellenkanten 10 oder 11 haben und jeweils mit einem Fuß 25 am Fördergurt 4 angebracht sind. Die Mitnehmerstollen 24 unterteilen den zwischen den beiden Fördergurten 4 und 5 gebildeten, kastenförmigen Förderraum 26 in einzelnen Längsabschnitte.

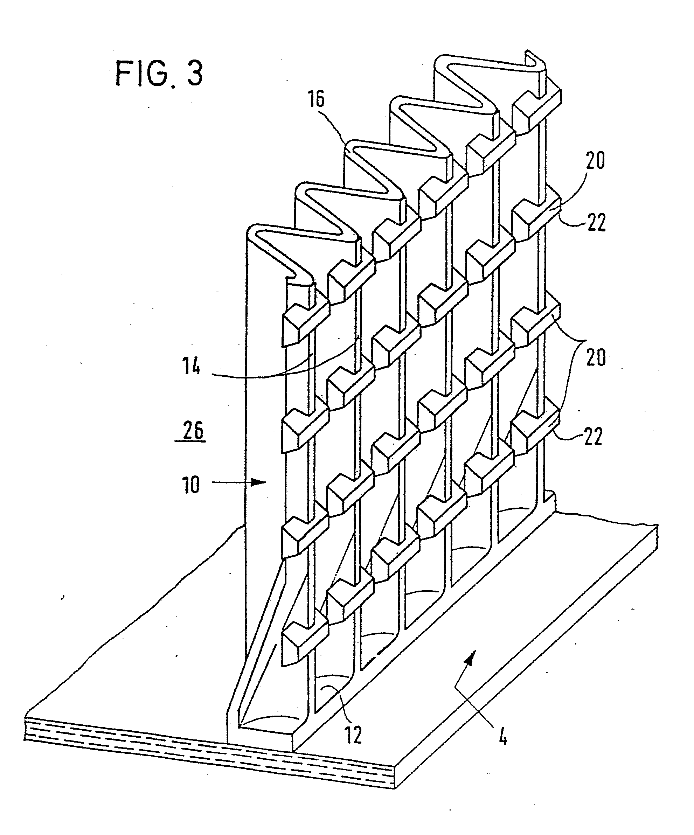

Figur 3 zeigt Einzelheiten der hinsichtlich des Förderraumes 26 aussen liegenden Seiten der beiden gleichen Wellenkanten 10 auf dem Traggurt 4. Die in etwa sinusförmige Wellenkante 10 weist dort vier zum Fördergurt parallele Reihen von Profilnoppen 20 auf, die zusammen mit der Wellenkante in einem Stück vulkanisiert sind. Die Profilnoppen befinden sich jeweils übereinander an den einzelnen Wellenscheiteln 14 der Wellenkante und stehen von dieser mit einer auf die Scheitelebene bezogenen Höhe von ca. 20 mm seitlich weg. Jeder Profilnoppen hat die Gestalt eines Obelisken, also eines Körpers mit trapezförmigen Querschnitt, dessen recht-eckige Grundfläche parallel zur Fördergurtlängs richtung und senkrecht zur Fördergurtebene steht, wobei die längere Seite in Fördergurtlängsrichtung weist und die kleinere Rechteckfläche aussen liegt. Hierdurch haben die Profilnoppen ebene Unterseiten 22, die parallel zur Fördergurtlängsrichtung sind und mit der Hauptebene der Wellenkante einen entsprechend dem trapezförmigen Querschnitt stumpfen Winkel einschließen. Alle Unterseiten der Profilnoppen einer Reihe liegen dabei in einer gemeinsamen Ebene. Jeder Profilnoppen ist derart mit der Wellenkante verbunden, daß er symmetrisch zu beiden Seiten ihres Wellenscheitels 14 ein Stück in die Tiefe der Wellenkante hinein reicht und der Wellenscheitel den eigentlichen obeliskförmigen Profilnoppen etwa in der Mitte durchsetzt.

Die Länge der Profilnoppen in Fördergurtlängstrichtung beträgt zwischen 57 und 60 % des Scheitelabstandes bzw. der Periode der Wellenkante. Demnach sind die Zwischenräume zwischen den Stirnseiten der Profilnoppen kleiner als ihre Länge. Die Reihen der Profilnoppen haben in Vertikalrichtung alle den gleichen gegenseitigen Abstand von z.B. 100 mm. Ungefähr den gleichen Abstand hält die unterste Reihe vom Fördergurt 4 ein, während die oberste Reihe vom Kopf 16 der Wellenkante einen deutlich kleineren Abstand hat. Alle Profilnoppen können abgerundet sein, was in der Zeichnung der Übersichtlichkeit halber nicht im einzelnen dargestellt ist.

Die Wellenkanten 11 des Deckgurtes 5 sind identisch, also auch hinsichtlich Ausbildung und Anordnung ihrer Profilnoppen 21, mit den Wellenkanten 10 des Traggurtes ausgebildet. Sie sind jedoch auf dem Deckgurt 5 seitenvertauscht derart angeordnet, daß die beim Traggurt aussenliegende Seite der Wellenkante beim Deckgurt innen liegt, vergleiche Figur 2.

Die Umlenktrommel 6a des Deckgurtes 5 an der Aufgabestelle ist auf beiden Seiten in Randbereichen 27 jeweils nach aussen konisch verjüngt, wobei der Neigungswinkel, den die konisch verjüngten Bereiche mit der Trommelachse einschliessen, ungefähr 5 Grad beträgt. Dies hat zur Folge, daß der Deckgurt 5 beim Umlauf um die Umlenktrommel 6a an seinen Rändern negativ gemuldet wird, weil er sich unter der im Gurt herrschenden Zugspannung mit seinen Rändern an die konisch verjüngten Randbereiche anliegt. Hierdurch kommt es zu einem seitlichen Abkippen seiner Wellenkanten nach aussen, was das behinderungsfreie "Aufstülpen" des Deckgurtes auf den mit Fördergut gefüllten Traggurt ermöglicht. Mit zunehmender Entfernung von der Umlenktrommel 6a kehrt der Deckgurt 5 in die Planlage zurück, wodurch sich seine Wellenkanten zunehmend senkrecht stellen und mit ihren Profilnoppen 21 mit dem Profilnoppen 20 am Traggurt nach Art einer Verzahnung in Eingriff treten. Durch entsprechende Wahl der Abstände der oberen Reihe von Profilnoppen vom Kopf der Wellenkante und der unteren Reihe von Profilnoppen vom jewiligen Fördergurt ist dabei dafür gesorg, daß die Profilnoppen 20 und 21 jeweils mit ihren Unterseiten 22 bzw. 23 in Berührung kommen und entsprechend im verriegelten Zustand bei der Wellenkante-Paare verhindern, daß sich die Köpfe 16 und 17 der Wellenkanten 10 bzw. 11 vom angrenzenden Fördergurt 5 bzw. 4 abheben. Im Zuge der Förderstrecke liegt also der Deckgurt 5 zwischen seinen Wellenkanten 11 fest auf dem Kopf 16 der Wellenkante 10, während die Wellenkante 11 mit ihrem Kopf 17 fest auf die seitliche, ausserhalb der Wellenkanten 10 liegenden Randbereiche des Traggurtes 4 aufgesetzt ist. Es wird also im Zuge der Förderstrecke ein kastenförmiger Förderraum 26 gebildet, der durch den gegenseitigen Eingriff der Profilnoppen 20 und 21 absolut dicht geschlossen gehalten wird. In Höhe der Abwurfstelle werden die Profilnoppen der Wellenkanten durch negative Muldung des Fördergurtes 5 wieder außer Eingriff gebracht, so daß ein Ausseinanderführen der beiden Fördergurte 4 und 5 und die Abgabe des Fördergurtes an der Abwurfstelle 3 möglich ist. Da vor der Abwurfstelle die Wellenkanten 11 des Fördergurtes 5 nach oben stehen, wird die seitliche Öffnungs-Kippbewegung der Wellenkanten 11 durch ihr eigenes Gewicht unterstützt.

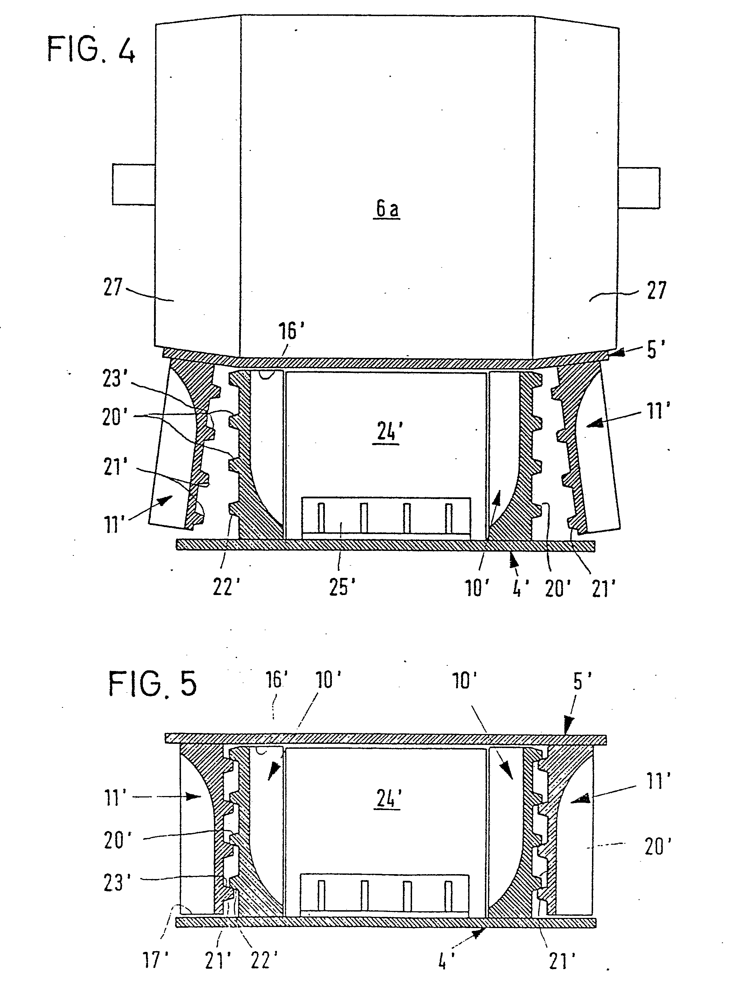

Die Figuren 4 und 5 zeigen die geschilderten Verhältnisse für zwei Fördergurte 4' and 5', bei denen die Profilnoppen 20' und 21' nicht in genau identischer Anordnung vorgesehen sind. Vielmehr liegt die oberste Reihe der Profilnoppen 20' am Traggurt 4' unmittelbar am Kopf 16' der Wellenkante 10' und berührt im zusammengeführten Zustand beider Fördergurte den Deckgurt 5', wodurch die Anlage verbessert wird. Die Anordnung der Reihen von Profilnoppen 21' an den Wellenkanten 11' des Deckgurtes 5' ist so angepasst, daß die Profilnoppen gegenseitig wieder mit ihren Unterseiten 22' und 23' in Eingriff treten, vergleiche Figur 5.

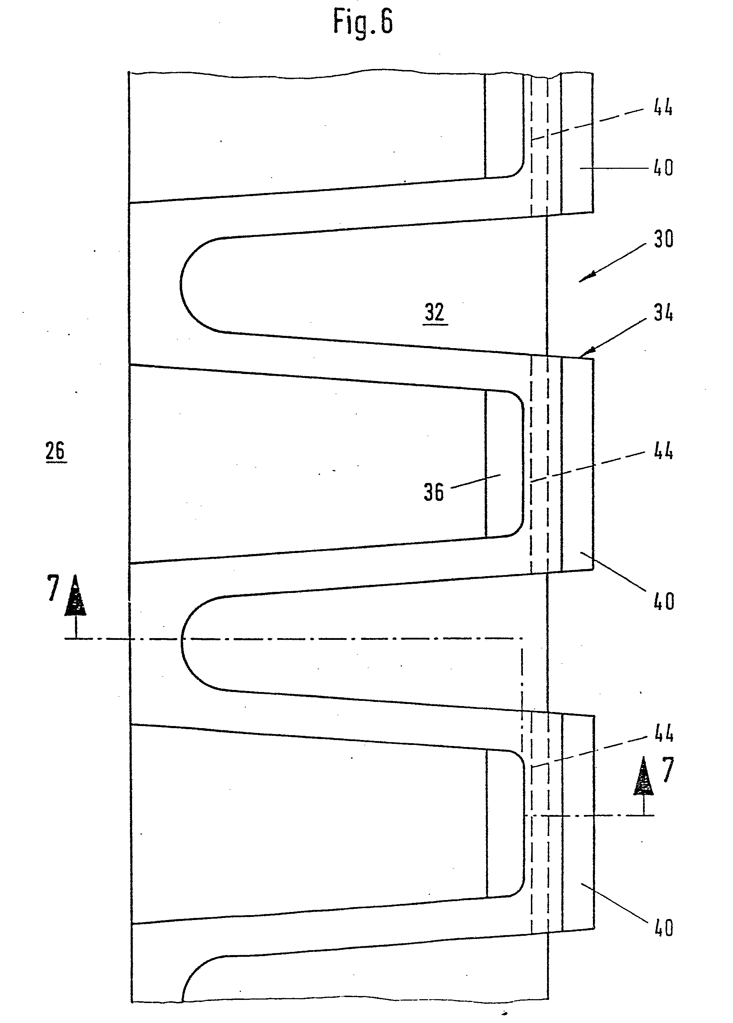

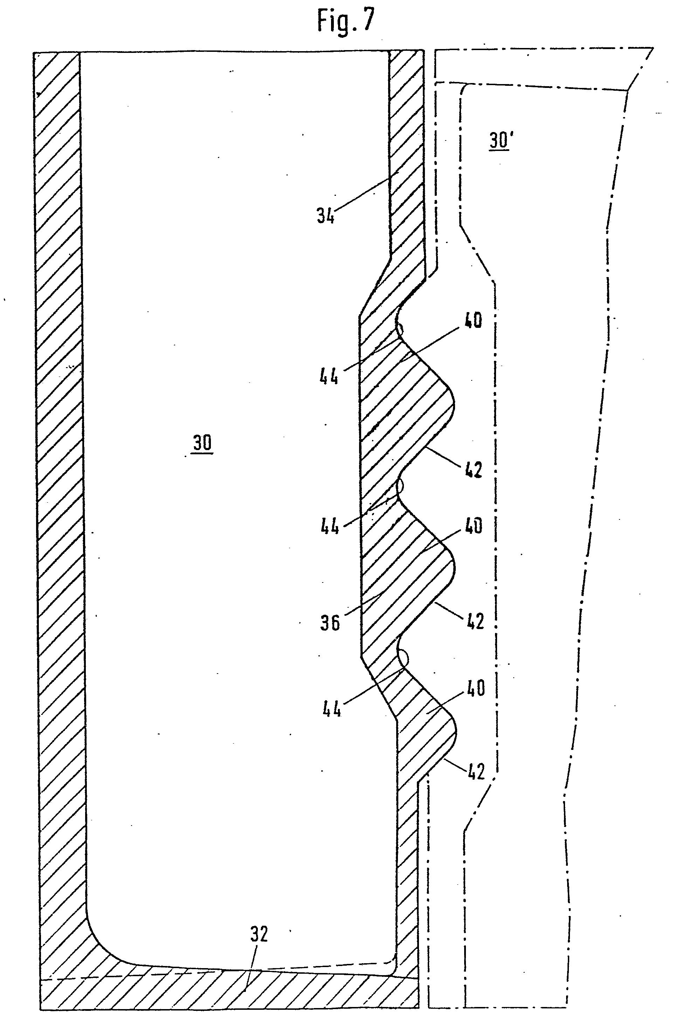

In den Figuren 6 und 7 ist eine in etwa rechteckförmige Wellenkante 30 dargestellt, die wie die Wellenkante 20 nach Figur 3 auf einen nicht dargestellten Fördergurt für einen Deckbandförderer, zum Beispiel den Deckbandförderer nach Figur 1, aufgesetzt ist und dort den gleichen Zweck und die gleiche Wirkung hat, wie es für das erste Ausführungsbeispiel nach den Figuren 1 bis 3 ausführlich erläutert wurde. Dabei handelt es sich um eine Wellenkante, die auf dem Tragund dem Deckgurt an identischer Ausführung zum Einsatz kommt, wobei eine besonders große Stabilität und eine besonders gute Abdichtung an den beiden Wellenkanten-Paaren erzielt wird.

Im einzelnen weist die Wellenkante 30 einen Fuß 32 für die übliche Verbindung mit dem Fördergurt auf. Auf diesem steht die eigentliche Rechteckwelle. Deren Wellenscheitel 34 auf der einen Seite der Wellenkante — im Falle des Traggurtes auf der vom Förderraum 26 abgewandten Seite — sind im wesentlich eben und haben eine Länge in Fördergurtlängsrichtung, die ungefähr knapp 60 % der Periode der Rechteckwelle gleicht. In einem, bezogen auf ihre vertikale Erstreckung, mittleren Bereich, sind die ungefähr senkrecht stehenden Wellenscheitel 34 mit einer nach inner vorspringenden Verdickung 36 versehen, vergleiche Figur 7.

Im Bereich der Verdickung 36 besitzt die Wellenkante 30 drei mit gegenseitigem Abstand übereinander vorgesehene Reihen von mit der Wellenkante einstückigen Profilen 40. Jedes Profil 40 steht seitlich über die Scheitelebene über und erstreckt sich in ganzer Länge seines Wellenscheitels 34 parallel zum Fuß 32 bzw. Fördergurt. Zwischen den Profilen 40 sowie über dem obersten desselben sind in jedem Wellenscheitel 34 drei Vertiefungen 44 vorgesehen, die in ihrer Gestalt komplementär zu den Profilen 40 sind und zusammem mit diesen einen ungefähr sinusförmigen Querschnitt haben, also der Wellenkante im Bereich der Verdickung 36 außen eine sinusförmige Kontur geben. Hierbei schließen die zur Fördergurtlängsrichtung parallelen Unterseiten 42 der Profile 40 mit der Hauptebene der Wellenkante einen Winkel ein, der in einem Übergangsbereich zwischen Vertiefung 44 und Profil 40 ungefähr 45 Grad beträgt. Die Vertiefungen 44 erstrecken sich wie die Profile 40 ebenfalls jeweils in ganzer Länge ihres Wellenscheitels, sind demnach an ihren in Fördergurtlängsrichtung weisenden Stirnenden offen.

In Figur 7 ist strichpunktiert dargestellt, wie sich beim Durchlaufen einer Förderstrecke die Profile und Vertiefungen einer gleichen, jedoch wegen ihrer Anbringung am anderen Fördergurt kopfstehenden Wellenkante 30' mit den Profilen 40 und Vertiefungen 44 der betrachteten Wellenkante 30 in Eingriff befinden. Die Profile 40 berühren sich nicht nur an ihren Unterseiten 42 zur Verhinderung des gegenseitigen Abhebens der Fördergurte, sondern es findet aufgrund der komplementären Kontur eine durchgehende gegenseitige Berührung aller Profile und Vertiefungen statt mit der Folge einer guten Abdichtung. Wegen der Vertiefungen stehen die Wellenscheitel beider Wellenkanten 30 und 30' mit nur einem sehr kleinen Zwischenraum zwischen sich nebeneinander.

## Patentansprüche

1. Deckbandförderer, insbesondere für die Steilförderung von staubigem Gut, mit zwei Fördergurten aus Gummi oder dergleichen, die an je einer Umlenkstelle für den einen Fördergurt (Deckgurt) am Anfang der Förderstrecke zusammen- und an deren Ende wieder auseinander geführt werden, längs der Förderstrecke mit Abstand parallel zueinander laufen und beide an den Längsrändern wegstehende Wellenkanten aus Gummi oder dergleichen aufweisen, die alle die gleiche Höhe haben und auf den Fördergurten seitlich versetzt zueinander derart angeordnet sind, daß die Wellenkanten des Deckgurtes in der Förderstrecke zur Bildung eines geschlossenen, kastenförmigen Förderraumes jeweils außen dicht neben den entsprechenden Wellenkanten des anderen Fördergurtes (Traggurt) stehen, dadurch gekennzeichnet, daß jede Wellenkante (10, 11; 30) an ihrer der jeweils nebenstehenden Wellenkante zuweisenden Seite im Bereich der Wellenscheitel (14, 15; 34) Profile (20, 21; 40) aufweist, die in einer oder mehreren, zum Fördergurt (4, 5) parallelen Reihen in solchem senkrechten Abstand vom Födergurt angeordnet sind, daß sich die Profile nebeneinander stehender Wellenkanten der beiden Fördergurte in der Förderstrecke reihenweise gegenseitig mindestens an ihren zum jeweiligen Fördergurt weisenden Unterseiten (22, 23; 42) berühren, und daß Mittel (6a, 27) zur Erzeugung seitlicher Kippbewegungen der Wellenkanten des Deckgurtes (5) an dessen Umlenkstellen am Anfang und Ende der Förderstrecke vorgesehen sind.

2. Deckbandförderer nach Anspruch 1, dadurch gekennzeichnet, daß an den Umlenkstellen des Deckgurtes (5) Umlenktrommeln (6a) vorgesehen sind, die zur Erzeugung der zeitlichen Kippbewegung auf beiden Seiten jeweils im Randbereich (27) nach aussen konisch verjüngt sind.

3. Deckbandförderers nach Anspruch 2, dadurch gekennzeichnet, daß die konisch verjüngten Randbereiche (27) mit der Trommelachse einen Neigungswinkel von ungefähr 5 Grad einschließen.

4. Deckbandförderer nach Anspruch 1, 2 oder 3, dadurch gekennzeichnet, daß die einzelnen Profile (20, 21; 40) in Fördergurtlängsrichtung eine Länge haben, die größer als der halbe Scheitelabstand der Wellenkanten (10, 11; 30) ist.

5. Deckbandförderer nach Anspruch 4, dadurch gekennzeichnet, daß die Länge der Profile (20, 21; 30) ca. 57 bis 60 % des Scheitelabstandes beträgt.

6. Deckbandförderer nach einem der Ansprüche 1 bis 5, dadurch gekennzeichnet, daß die Unterseiten (22, 23) der Profile (20, 21) eben sind.

7. Deckbandförderer nach einem der Ansprüche 1 bis 6, dadurch gekennzeichnet, daß die Unterseiten (22, 23; 42) der Profile (20, 21; 40) jeder Wellenkante (10, 11, 30) derart geneigt sind, daß der Abstand zwischen Unterseite und Fördergurt (4, 5) mit zunehmender Entfernung von der zugeordneten, eigentlichen Wellenkante zunimmt.

8. Deckbandförderer nach einem der Ansprüche 1 bis 7, dadurch gekennzeichnet, daß die Profile (40) abgerundet sind.

9. Deckbandförderer nach einem der Ansprüche 1 bis 8, dadurch gekennzeichnet, daß die Profile (20, 21; 40) einstückig mit ihrer Wellenkante (10, 11; 30) sind.

10. Deckbandförderer nach einem der Ansprüche 1 bis 9, dadurch gekennzeichnet, daß die Profile (20, 21) als einzelne Profilnoppen von ungefähr quader- oder obeliskförmiger Gestalt ausgebildet sind.

11. Deckbandförderer nach einem der Ansprüche 1 bis 9, dadurch gekennzeichnet, daß mindestens eine von zwei nebeneinander stehenden Wellenkanten (30) in ihren Wellenscheiteln (34) unter und/oder über den Profilen (40) Vertiefungen (44) zur Aufnahme von Profilen der anderen Wellenkante (30') aufweist, die an ihren in Fördergurtlängsrichtung weisenden Stirnenden offen sind.

12. Deckbandförderer nach Anspruch 11, dadurch gekennzeichnet, daß die Vertiefungen (44) in ihrer Querschnitt komplementär zu den aufzunehmenden Profilen (42) sind.

13. Deckbandförderer nach Anspruch 12, dadurch gekennzeichnet, daß an jedem Wellenscheitel (34) Profile (40) und Vertiefungen (44) in vertikaler Richtung abwechselnd aufeinander folgen und zusammen einen ungefähr sinusförmigen Querschnitt haben.

14. Deckbandförderer nach einem der Ansprüche 1 bis 13, dadurch gekennzeichnet, daß alle Wellenkanten (10, 11; 30) identisch mit einer hinsichtlich ihrer beiden Seiten unsymmetrischen Wellung ausgebildet sind und ihre Profile (20, 21; 40) alle an der, bezogen auf die Unsymmetrie, gleichen Seite aufweisen.

15. Deckbandförderer nach Anspruch 14, dadurch gekennzeichnet, daß beide Fördergurte (4, 5) identische Wellenkanten (10, 11; 30), auch hinsichtlich der Anordnung der Profile (20, 21; 40), aufweisen.

## Claims

1. A cover belt conveyor, in particular for steep conveyance of dusty material, comprising two conveyor belts of rubber or the like, being guided towards and away from each other, respectively, at return locations of the one conveyor belt (cover belt) at the beginning and at the end, respectively, of the conveyor path, running in spaced parallel relationship along the conveyor path, and both comprising, at their longitudinal edges, projecting waved ridges of rubber or the like, all of the same height and arranged laterally offset on the conveyor belts such that the waved ridges of the cover belt in the conveyor path each are disposed at the outside and in close proximity of the corresponding waved ridges of the other conveyor belt (carrier belt) forming a closed box-shaped conveyor space, characterized in that each waved ridge (10, 11; 30) comprises profiles (20, 21; 40) at the side facing the respective neighboring waved ridge in the area of the wave crests (14, 15; 34) and arranged in one or more rows in parallel with the conveyor belt (4, 5) and at such vertical spacing from the conveyor belt that the profiles of adjacent waved ridges of the two conveyor belts in the conveyor path contact each other in rows at least at their respective undersides (22, 23; 42) facing the corresponding conveyor belt, and in that means (6a, 27) are provided to produce lateral tilting movement of the waved ridges of the cover belt (5) at the return locations thereof at the beginning and end of the conveyor path.

2. A cover belt conveyor according to claim 1, characterized in that return drums (6a) which taper conically outwardly at either side in the marginal zone (27) each, to produce the lateral tilting movement, are provided at the return locations of the cover belt (5).

3. A cover belt conveyor according to claim 2, characterized in that the conically tapering marginal zones (27) form an angle of inclination of approximately 5° with the drum axis.

4. A cover belt conveyor according to claim 1, 2 or 3, characterized in that the length of the individual profiles (20, 21; 40) in longitudinal direction of the conveyor belt is greater than half the spacing between crests of the waved ridges (10, 11; 30).

5. A cover belt conveyor according to claim 4, characterized in that the length of the profiles (20, 21; 30) corresponds to approximately 57 to 60% of the spacing between crests.

6. A cover belt conveyor according to one of claims 1 to 5, characterized in that the undersides (22, 23) of the profiles (20, 21) are flat.

7. A cover belt conveyor according to one of claims 1 to 6, characterized in that the undersides (22, 23; 42) of the profiles (20, 21; 40) of each waved ridge (10, 11, 30) are so inclined that the spacing between the underside and the conveyor belt (4, 5) increases at increasing distance from the corresponding waved ridge proper.

8. A cover belt conveyor according to one of claims 1 to 7, characterized in that the profiles (40) are rounded off.

9. A cover belt conveyor according to one of claims 1 to 8, characterized in that the profiles (20, 21; 40) are formed integral with their waved ridges (10, 11; 30).

10. A cover belt conveyor according to one of claims 1 to 9, characterized in that the profiles (20, 21) are formed as individual profile knobs having the approximate shape of a parallelepiped or obelisk.

11. A cover belt conveyor according to one of claims 1 to 9, characterized in that at least one of two adjacent waved ridges (30) is formed in its wave crests (34) below and/or above the profiles (40) with depressions (44) serving to receive profiles of the other waved ridge (30') and open at their front ends which face in longitudinal direction of the conveyor belt.

12. A cover belt conveyor according to claim 11, characterized in that the depressions (44) are complementary in cross sectional shape to the profiles (42) to be received.

13. A cover belt conveyor according to claim 12, characterized in that at each wave crest (34) profiles (40) and depressions (44) alternate in vertical direction, consecutively constituting an approximately sine-shaped cross section.

14. A cover belt conveyor according to one of claims 1 to 13, characterized in that all waved ridges (10, 11; 30) are formed identically with an unsymmetric undulation, with respect to their two sides, and all have their profiles (20, 21; 40) at the same side with respect to the unsymmetry.

15. A cover belt conveyor according to claim 14, characterized in that both conveyor belts (4, 5) comprise identical waved ridges (10, 11; 30) also in regard of the arrangement of the profiles (20, 21; 40).

## Revendications

1. Convoyeur à deux bandes superposées, ou convoyeur de type "sandwich", en particulier pour transporter un produit pulvérulent sur des pentes raides, comportant deux courroies de transport en caoutchouc ou analogue, qui, chaque fois en une position de renvoi de l'une des courroies (courroie couvrante), sont accolées au début de parcours de transport et de nouveau séparées à son terme, circulent parallèlement et à distance le long de l'itinéraire de transport, et présentent des ridelles ondulées, en caoutchouc ou analogue se dressant à partir des bords longitudinaux des deux courroies, ces ridelles ayant toutes la même hauteur et étant déportées latéralement entre elles de façon que les ridelles de la courroie couvrante se dressent pendant le parcours de transport chacune à l'extérieur des ridelles de l'autre courroie (courroie portante) et tout contre celles-ci, de façon à constituer un volume fermé en forme de caisson, caractérisé en ce que chaque ridelle ondulée (10, 11; 30), sur son côté dirigé vers la ridelle adjacente, présente dans la zone des crêtes d'ondulation (14, 15; 34) des profilés (20, 21; 40) qui sont disposés sur une ou plusieurs rangées parallèles à la courroie de transport (4, 5) situées à une distance telle de la courroie que dans le parcours de transport, les profilés de ridelles adjacentes appartenant aux deux courroies de transport sont en contact réciproque par rangées, au moins par leurs faces inférieures (22, 23; 42) tournées vers leur courroie respective, et en ce que des moyens (6a, 27) sont prévus pour produire des mouvements latéraux de basculement des ridelles de la courroie couvrante (5) à ses points de retournement au début et à la fin du parcours de transport.

2. Convoyeur selon la revendication 1, caractérisé en ce que, aux points de retournement de la courroie couvrante (5), sont prévus des rouleaux de renvoi (6a) dont les bords (27) sont de chaque côté rétrécis coniquement vers l'extérieur pour produire le basculement latéral.

3. Convoyeur selon la revendication 2, caractérisé en ce que les bords rétrécis coniquement forment avec l'axe du rouleau un angle d'inclinaison d'environ 5 degrés.

4. Convoyeur selon la revendication 1, 2 ou 3, caractérisé en ce que les profilés individuels (20, 21; 40) ont, dans le sens longitudinal de la courroie de transport, une dimension qui est plus grande que le demi-intervalle entre crêtes des ridelles ondulées (10, 11; 30).

5. Convoyeur selon la revendication 4, caractérisé en ce que la longueur des profilés (20, 21; 30) atteint environ 57 à 60 % de l'intervalle entre crêtes.

6. Convoyeur selon l'une des revendications 1 à 5, caractérisé en ce que les faces inférieures (22, 23) des profilés (20, 21) sont planes.

7. Convoyeur selon l'une des revendications 1 à 6, caractérisé en ce que la face inférieure (22, 23; 42) de chaque profilé (20, 21; 40) est inclinée de façon que la distance entre face inférieure et courroie (4, 5) croît lorsqu'on s'éloigne de la ridelle (10, 11; 30) qui porte ce profilé.

8. Convoyeur selon l'une des revendications 1 à 7, caractérisé en ce que les profilés (40) sont arrondis.

9. Convoyeur selon l'une des revendications 1 à 8, caractérisé en ce que les profilés (20, 21; 40) sont d'un seul tenant avec leur ridelle (10, 11; 30).

10. Convoyeur selon l'une des revendications 1 à 9, caractérisé en ce que les profilés (20, 21) ont la conformation de taquets individuels de forme à peu près parallélépipédique ou en tronc de pyramide.

11. Convoyeur selon l'une des revendications 1 à 9, caractérisé en ce que l'une au moins parmi deux ridelles (30) se dressant l'une à côté de l'autre présente dans ses crêtes d'ondulation (34), au-dessus et/ou au-dessous des profilés (40) des creux (44) pour le logement de profilés de l'autre ridelle (30'), qui sont ouverts sur leurs extrémités frontales tournées dans la direction longitudinale de la courroie.

12. Convoyeur selon la revendication 11, caractérisé en ce que les creux (44) sont, par leur section, complémentaires des profilés (42) à loger.

13. Convoyeur selon la revendication 12, caractérisé en ce que, sur chaque crête d'ondulation (34), des profilés (40) et des creux (44) se succèdent en alternant dans le sens vertical et ont ensemble une section sensiblement sinusoïdale.

14. Convoyeur selon l'une des revendications 1 à 13, caractérisé en ce que toutes les ridelles (10, 11; 30) ont une conformation identique avec une ondulation dissymétrique en ce qui concerne leurs deux côtés, et présentent leurs profilés (20, 21; 40) tous sur le même côté relativement à la dissymétrie.

15. Convoyeur selon la revendication 14, caractérisé en ce que les deux courroies de transport (4, 5) présentent des ridelles identiques (10, 11; 30) même en ce qui concerne la disposition des profilés (20, 21; 40).

FIG.1

FIG.2

FIG. 3

FIG. 4

FIG. 5

# Fig.6

## Fig. 7